# EUROPÄISCHE PATENTSCHRIFT

(11) **EP 1 790 212 B1**
(45) Veröffentlichungstag und Bekanntmachung des Hinweises auf die Patenterteilung: **16.04.2008**
(21) Anmeldenummer: 06022103.3
(22) Anmeldetag: 21.10.2006
(51) Int. Cl.: A01G 9/02

(54) **Pflanztopf-Anordnung**
Flower pot arrangement
Arrangement de pot de fleurs

(30) Priorität: 26.11.2005 DE 202005018519 U
(43) Veröffentlichungstag der Anmeldung: 30.05.2007
(73) Patentinhaber: Geobra Brandstätter GmbH & Co. KG, D-90513 Zirndorf (DE)
(72) Erfinder: Brandstätter, Horst, 90513 Zirndorf (DE)
(74) Vertreter: Rau, Albrecht

(56) Entgegenhaltungen:
- DE-C1- 4 004 136
- DE-U1- 9 011 760
- US-A- 4 223 480
- US-A- 5 099 608
- US-A- 6 088 962

## Beschreibung

Die Erfindung betrifft eine Pflanztopf-Anordnung.

Aus der DE 40 04 136 C1 ist eine Pflanztopf-Anordnung bekannt, die einen Übertopf und einen darin einsetzbaren Einsetz-Behälter aufweist. Zum Herausnehmen des Einsetz-Behälters aus dem Übertopf sind an den Einsetz-Behälter im Bereich des oberen Behälter-Randes Vorsprünge angeformt, die sich in entsprechend ausgebildete Aussparungen des Übertopfes erstrecken. Nachteilig bei einer derartigen Pflanztopf-Anordnung ist, dass diese optisch nur wenig ansprechend ist.

Der Erfindung liegt die Aufgabe zugrunde eine optisch ansprechende Pflanztopf-Anordnung zu schaffen, die ein einfaches Herausnehmen eines Einsetz-Behälters aus einem Übertopf ermöglicht.

Diese Aufgabe wird durch die Merkmale des Anspruchs 1 gelöst. Der Kern der Erfindung besteht darin, dass der mindestens eine im Bereich des Behälter-Randes angeordnete Griff in der Griff-Führung geführt verlagerbar ist. Zur Erzielung einer optisch ansprechenden, dekorativen Wirkung der Pflanztopf-Anordnung ist der mindestens eine Griff entgegen die Ausziehrichtung in der Griff-Führung einschiebbar, so dass dieser im Wesentlichen nicht sichtbar ist. Zum Herausnehmen des Einsetz-Behälters aus dem Übertopf ist der mindestens eine Griff in der Ausziehrichtung ausschiebbar, so dass ein einfaches Umgreifen des mindestens einen Griffs und Herausheben des Einsetz-Behälters ermöglicht wird.

Weitere vorteilhafte Ausgestaltungen der Erfindung ergeben sich aus den Unteransprüchen.

Zusätzliche Merkmale und Vorteile der Erfindung ergeben sich aus der Beschreibung mehrerer Ausführungsbeispiele anhand der Zeichnung. Es zeigen:
- Fig. 1: eine perspektivische Ansicht einer Pflanztopf-Anordnung gemäß einem ersten Ausführungsbeispiel mit einem zum Herausnehmen vorbereiteten und eine Pflanze aufweisenden Einsetz-Behälter,
- Fig. 2: eine perspektivische Ansicht des Einsetz-Behälters in Fig. 1 ohne Pflanze,
- Fig. 3: eine perspektivische Ansicht eines Griffes des Einsetz-Behälters in Fig. 2 in einem teilweise herausgezogenem Zustand,
- Fig. 4: eine perspektivische Ansicht des Griffes in Fig. 3 in einem vollständig herausgezogenem Zustand,
- Fig. 5: einen Schnitt durch den Griff in Fig. 4 entlang der Schnittlinie V-V,
- Fig. 6: einen Schnitt durch den Griff entsprechend Fig. 5 in einem vollständig eingeschobenen Zustand,
- Fig. 7: eine perspektivische Ansicht eines Einsetz-Behälters einer Pflanztopf-Anordnung gemäß einem zweiten Ausführungsbeispiel,

- Fig. 8: eine transparente Seitenansicht des Einsetz-Behälters in Fig. 7, und
- Fig. 9: eine perspektivische Ansicht eines Griffes des Einsetz-Behälters in Fig. 7 in einem teilweise herausgezogenen Zustand.

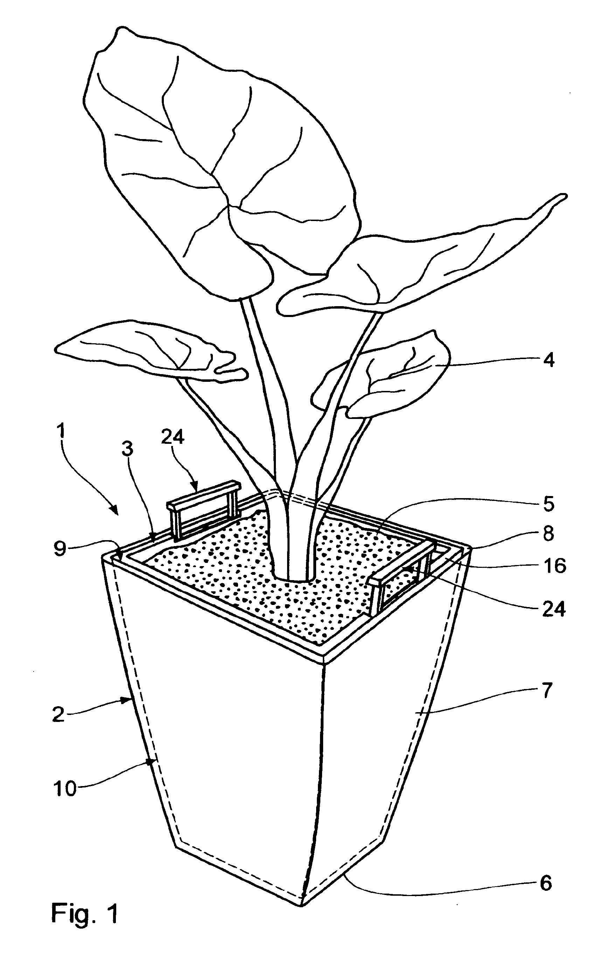

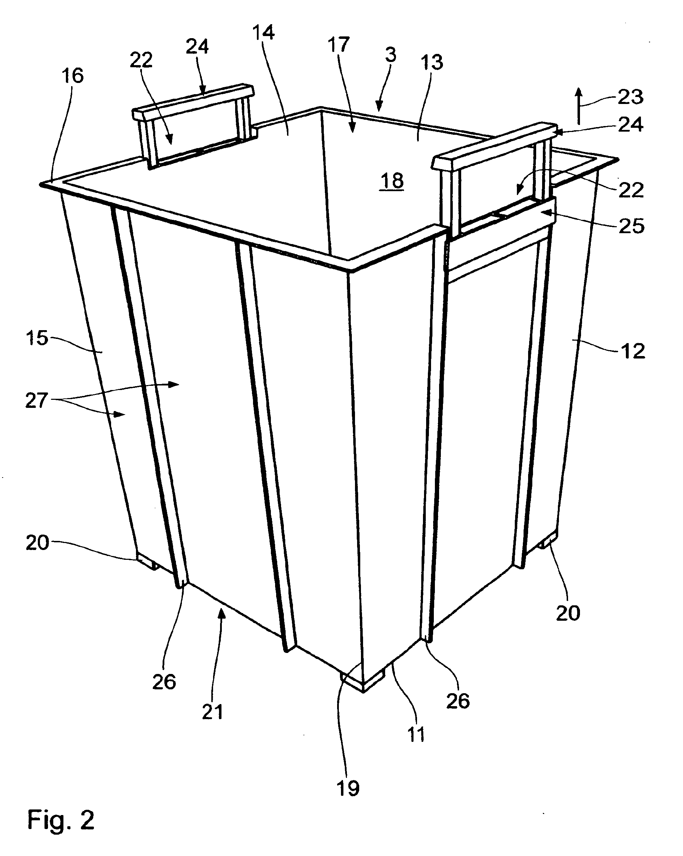

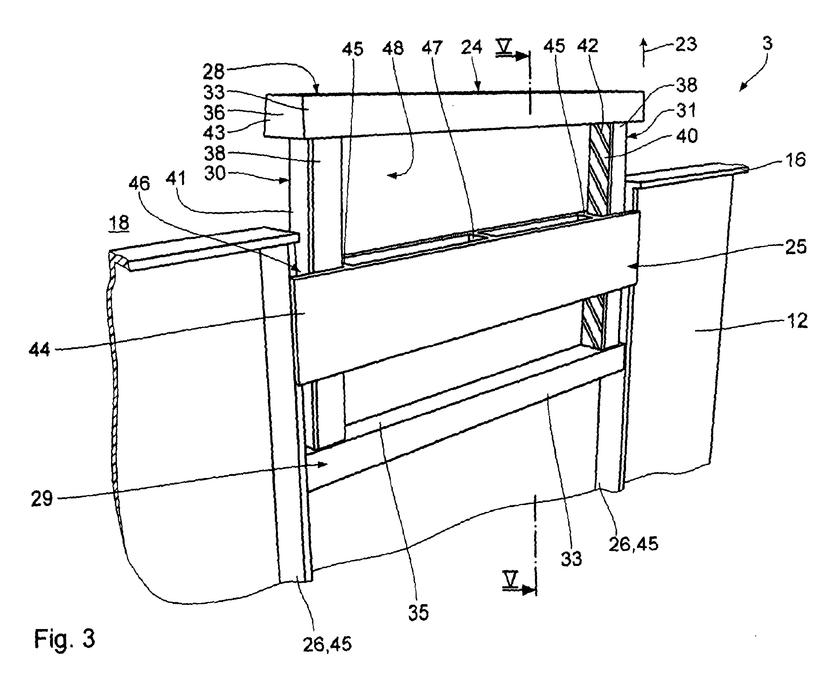

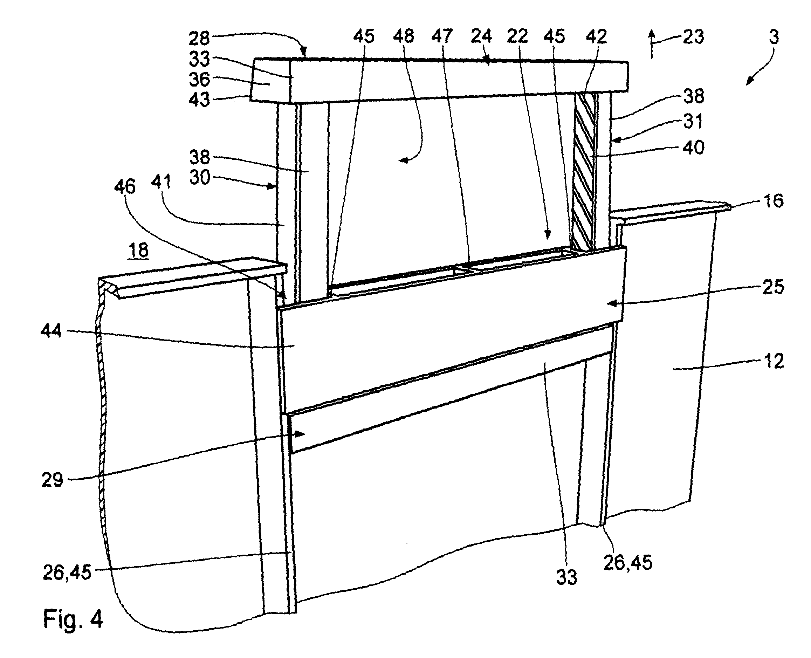

Nachfolgend wird unter Bezugnahme auf die Fig. 1 bis 6 ein erstes Ausführungsbeispiel der Erfindung beschrieben. Eine in Fig. 1 dargestellte Pflanztopf-Anordnung 1 weist einen Übertopf 2 und einen in dem Übertopf 2 angeordneten und aus diesem herausnehmbaren Einsetz-Behälter 3 auf. Der Einsetz-Behälter 3 ist zum Einpflanzen einer Pflanze 4 mit einem Substrat 5, beispielsweise Pflanz-Erde, gefüllt.

Der Übertopf 2 weist einen im Wesentlichen quadratisch ausgebildeten Übertopf-Boden 6 und vier randseitig daran angeordnete Übertopf-Seitenwände 7 auf. Die Übertopf-Seitenwände 7 verlaufen ausgehend von dem Übertopf-Boden 6 derart, dass sich der Abstand von jeweils zwei gegenüberliegenden Übertopf-Seitenwänden 7 in Richtung einer von einem Übertopf-Rand 8 begrenzten Einführ-Öffnung 9 vergrößert. Die Querschnittsfläche des Übertopfes 2 nimmt somit ausgehend von dem Übertopf-Boden 6 in Richtung der Einführ-Öffnung 9 kontinuierlich zu. Der Übertopf-Boden 6 und die Übertopf-Seitenwände 7 begrenzen einen AufnahmeRaum 10 zur Aufnahme des Einsetz-Behälters 3. Der Übertopf 2 ist einteilig ausgebildet und besteht aus hochwertigem Kunststoff.

Der in den Übertopf 2 einsetzbare Einsetz-Behälter 3 weist im Wesentlichen die Form des Aufnahme-Raums 10 auf. Der Einsetz-Behälter 3 umfasst eine quadratischen Behälter-Boden 11 und vier randseitig daran angeordnete Behälter-Seitenwände 12, 13, 14, 15. Die Behälter-Seitenwände 12, 13, 14, 15 verlaufen ausgehend von dem Behälter-Boden 11 derart, dass sich der Abstand von jeweils zwei gegenüberliegenden Seitenwänden 12, 14 und 13, 15 in Richtung einer von einem oberen Behälter-Rand 16 begrenzten Pflanz-Öffnung 17 vergrößert. Der Behälter-Boden 11 und die Behälter-Seitenwände 12, 13, 14, 15 begrenzen einen Pflanz-Raum 18, der aufgrund der Pflanz-Öffnung 17 im Bereich des Behälter-Randes 16 offen ausgebildet ist. Jeweils zwei benachbarte Behälter-Seitenwände 12, 13, 14, 15 bilden Längs-Kanten 19 des Einsetz-Behälters 3 aus. An der dem Pflanz-Raum 18 gegenüberliegenden Seite des Behälter-Bodens 11 sind im Bereich der Längs-Kanten 19 Abstands-Halter 20 einteilig an den Einsetz-Behälter 3 angeformt, wobei die Abstands-Halter 20 bündig mit den Behälter-Seitenwänden 12, 13, 14, 15 verlaufen. Im eingesetzten Zustand des Einsetz-Behälters 3 liegen die Abstand-Halter 20 an dem Übertopf-Boden 6 an, wobei zwischen dem Übertopf-Boden 6 und dem Behälter-Boden 11 ein erster Zwischenraum 21 ausgebildet wird.

Der Behälter-Rand 16 ist relativ zu den Behälter-Seitenwänden 12, 13, 14, 15 derart abgewinkelt, dass er im Wesentlichen horizontal außerhalb des Pflanz-Raumes 18 verläuft. An zwei gegenüberliegenden Behälter-Seitenwänden 12, 14 weist der Behälter-Rand 16 und die Behälter-Seitenwände 12, 14 jeweils eine mittig angeordnete Ausnehmung 22 zur Aufnahme eines im Bereich des Behälter-Randes 16 angeordneten und entlang einer Ausziehrichtung 23 geführt verlagerbaren Griffes 24 auf. Zur geführten Verlagerung der Griffe 24 ist jeweils eine Griff-Führung 25 vorgesehen. Alternativ kann auch an allen Seitenwänden 12, 13, 14, 15 ein Griff 24 mit einer Griff-Führung 25 vorgesehen sein.

An den Behälter-Seitenwänden 12, 13, 14, 15 sind außerhalb des Pflanz-Raums 18 jeweils zwei Versteifungs-Streben 26 einteilig angeformt. Die Versteifungs-Streben 26 verlaufen ausgehend von dem Behälter-Boden 11 im Wesentlichen entlang der Ausziehrichtung 23 bis zu dem Behälter-Rand 16, wobei die Versteifungs-Streben 26 einteilig mit dem Behälter-Rand 16 verbunden sind. Die jeweils zwei zu einer Behälter-Seitenwand 12, 13, 14, 15 zugehörigen Versteifungs-Streben 26 sind parallel zueinander und weisen jeweils gleiche Abstände von den benachbarten Längs-Kanten 19 auf. Der Abstand zwischen den parallelen Versteifungs-Streben 26 entspricht der Länge der Ausnehmungen 22, so dass die Ausnehmungen 22 seitlich von den Versteifungs-Streben 26 begrenzt werden.

Im eingesetzten Zustand des Einsetz-Behälters 3 verläuft der Behälter-Rand 16 mit dem Übertopf-Rand 8 im Wesentlichen bündig. Zwischen den Behälter-Seitenwänden 12, 13, 14, 15 und den Übertopf-Seitenwänden 7 werden zweite Zwischenräume 27 ausgebildet, die mit dem bodenseitigen ersten Zwischenraum 21 in Verbindung stehen.

Die Griffe 24 und die zugehörigen Griff-Führungen 25 sind außerhalb des Pflanz-Raums 18 angeordnet. Die Griffe 24 und die zugehörigen Griff-Führungen 25 sind an den Behälter-Seitenwänden 12, 14 identisch ausgebildet, so dass nachfolgend lediglich der Griff 24 an der Behälter-Seitenwand 12 beschrieben wird. Der Griff 24 weist eine erste Quer-Stange 28 und eine parallel zu dieser verlaufende zweite Quer-Stange 29 auf, die einteilig mit einer ersten Längs-Stange 30 und einer parallel zu dieser verlaufenden zweiten Längs-Stange 31 im Wesentlichen zu einem Rechteck verbunden sind. Die Längs-Stangen 30, 31 verlaufen parallel zu der Ausziehrichtung 23, wohingegen die Quer-Stangen 28, 29 quer zu dieser verlaufen. Die Quer-Stangen 28, 29 weisen jeweils eine dem Pflanz-Raum 18 zugewandte innere Seitenwand 32, eine dem Pflanz-Raum 18 abgewandte äußere Seitenwand 33, eine dem Behälter-Boden 11 zugewandte untere Seitenwand 34 und eine dem Behälter-Boden 11 abgewandte Seitenwand 35 sowie den Versteifungs-Streben 26 zugewandte Stirnwände 36 auf. Entsprechend zu den Quer-Stangen 28, 29 weisen die Längs-Stangen 30, 31 innere Seitenwände 37, äußere Seitenwände 38 und den Quer-Stangen 28, 29 zugewandte Stirnwände 39 auf. Die Längs-Stangen 30, 31 sind mit den Stirnwänden 39 an die Quer-Stangen 28, 29 angeformt, wobei die Anordnung und der Querschnitt der Längs-Stangen 30, 31 derart ist, dass die Quer-Stangen 28, 29 im Bereich ihrer freien Enden über die Längs-Stangen 30, 31 überstehen. Die Längs-Stangen 30, 31 weisen weiterhin einander zugewandte profilierte Seitenwände 40 und den profilierten Seitenwänden 40 gegenüberliegende freiliegende Seitenwände 41 auf.

An den profilierten Seitenwänden 40 der Längs-Stangen 30, 31 ist eine Profilierung 42 in Form von schräg zu der Ausziehrichtung 23 verlaufenden Rippen ausgebildet. Alternativ sind auch andere Profilierungen 42 möglich. Zum einfacheren Greifen des Griffs 24 weist die erste Quer-Stange 28 einen sich in den Pflanz-Raum 18 erstreckenden Vorsprung 43 auf, der einteilig an die innere Seitenwand 32 und die untere Seitenwand 34 angeformt ist.

Die Längs-Stangen 30, 31 sind derart in der Griff-Führung 25 aufgenommen, dass der Griff 24 in der Ausziehrichtung 23 verschiebbar ist. Die Griff-Führung 25 wird gebildet durch die Behälter-Seitenwand 12, eine parallel und beabstandet zu der Behälter-Seitenwand 12 verlaufende Führungs-Platte 44 und durch zwischen der Behälter-Seitenwand 12 und der Führungs-Platte 44 quer zu diesen verlaufende Längs-Streben 45. Zur Aufnahme einer Längs-Stange 30, 31 bilden die Seitenwand 12 die Führungs-Platte 44 und die Längs-Streben 45 eine Führungs-Öffnung 46 aus, wobei eine Längs-Strebe 45 als Versteifungs-Strebe 26 zur Versteifung des Einsetz-Behälters 3 ausgebildet ist. Die den profilierten Seitenwänden 40 zugewandten Längs-Streben 45 weisen mittig zwischen sich eine ebenfalls als Längs-Strebe ausgebildete Führungs-Versteifung 47 auf. Die zwischen den profilierten Seitenwänden 40 angeordneten Längs-Streben 45 und die Führungs-Versteifung 47 schließen jeweils bündig mit der Behälter-Seitenwand 12 und der Führungs-Platte 44 ab.

Zur Führung des Griffs 24 bei einer Verlagerung entlang der Ausziehrichtung 23 liegen die inneren Seitenwände 37 der Längs-Stangen 30, 31 an der Behälter-Seitenwand 12, die äußeren Seitenwände 38 an der Führungs-Platte 44 und die profilierten Seitenwände 40 an den Längs-Streben 45 an. Ferner liegt die innere Seitenwand 32 der zweiten Quer-Stange 29 an der Behälter-Seitenwand 12, 14 und die Stirnwände 36 der zweiten Quer-Stange 29 an den Versteifungs-Streben 26 an. Beim Verlagern des Griffs 24 liegen auch teilweise die Stirnwände 36 der ersten Quer-Stange 28 an dem Behälter-Rand 16 und den Versteifungs-Streben 26 an.

Zum Umgreifen des Griffs 24 begrenzen die erste Quer-Stange 28, die Längs-Stangen 30, 31 und die Griff-Führung 25 eine Durchgriff-Öffnung 48, deren Größe abhängig von der Position des Griffs 24 relativ zu der Griff-Führung 25 einstellbar ist.

Der Einsetz-Behälter 3, die Griffe 24 und die Griff-Führungen 25 bestehen aus Kunststoff, wobei die Griff-Führungen 25 einteilig mit dem Einsetz-Behälter 3 ausgebildet sind. Zum Anordnen der Griffe 24 in der jeweiligen Griff-Führung 25 sind die Führungs-Platten 44 im Bereich der Versteifungs-Streben 26 flexibel ausgebildet und nicht mit den diesen verbunden.

Weiterhin kann in dem Einsetz-Behälter 3 ein zusätzlicher Trenn-Boden angeordnet sein, so dass zwischen diesem und dem Behälter-Boden 11 ein Wasser-Vorratsraum ausgebildet wird. Zur Anzeige des Wasserstandes im Wasser-Vorratsraum kann weiterhin ein Wasserstands-Anzeiger vorgesehen sein. Hinsichtlich der Ausbildung und der Funktion des Wasser-Vorratsraum wird auf die DE 299 16 691 U1 verwiesen.

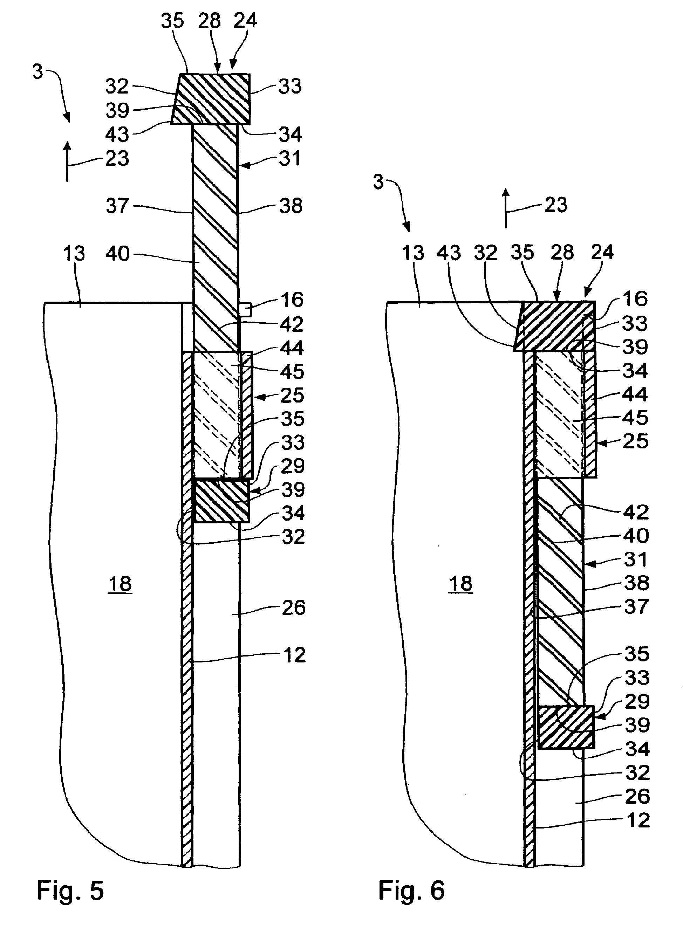

Im Folgenden wird die Funktionsweise der Pflanztopf-Anordnung 1 beschrieben. Ausgehend von einem vollständig eingeschobenen Zustand der Griffe 24 gemäß Fig. 6 wird zunächst das Ausschieben der Griffe 24 und das Herausnehmen des Einsetz-Behälters 3 beschrieben. Im vollständig eingeschobenen Zustand liegen die ersten Quer-Stangen 28 der Griffe 24 mit ihren unteren Seitenwänden 34 an den Behälter-Seitenwänden 12, 14, den Führungs-Platten 44, den Längs-Streben 45 und den Führungs-Versteifungen 47 an, so dass eine weiter Verschiebung der Griffe 24 entgegen die Ausziehrichtung 23 begrenzt wird. Die oberen Seitenwände 35 der Griffe 24 sind mit dem Behälter-Rand 16 bündig. Die Vorsprünge 43 der Griffe 24 springen über die Behälter-Seitenwände 12, 14 vor, wobei das Substrat 5 die Vorsprünge 43 nicht überdeckt. In diesem Zustand sind die Griffe 24 im Wesentlichen nicht sichtbar, so dass die Pflanztopf-Anordnung 1 optisch ansprechend und dekorativ ist. Zum Ausschieben der Griffe 24 wird auf die Vorsprünge 43 eine in die Ausziehrichtung 23 gerichtete Kraft ausgeübt. Die Griffe 24 werden aufgrund der Kraft in die Ausziehrichtung 23 verlagert, wobei sich zunehmend die Durchgriff-Öffnung 48 ausbildet. Die Griffe 24 werden in der jeweiligen Griff-Führung 25 geführt, wobei durch die Profilierungen 42 die Reibung zwischen den profilierten Seitenwänden 42 und den Längs-Streben 45 derart erhöht wird, dass eine selbsttätige Verlagerung der Griffe 24 entgegen die Ausziehrichtung 23 aufgrund der Schwerkraft ohne eine zusätzliche äußere Kraft nicht möglich ist. Die Griffe 24 sind solange in die Ausziehrichtung 23 verlagerbar, bis die zweiten Quer-Stangen 29 mit ihrer oberen Seitenwänden 35 gegen die Führungs-Platten 44, die Längs-Streben 45 und die Führungs-Versteifungen 47 anschlagen und die Verlagerung somit begrenzt wird. Dieser Zustand ist in Fig. 5 gezeigt. Die Griffe 24 sind nun vollständig ausgefahren, wobei die Durchgriff-Öffnungen 48 eine maximale Größe aufweisen. Die ersten Quer-Stangen 28 der Griffe 24 sind nun einfach umgreifbar, so dass der Einsetz-Behälter 3 an den Griffen 24 aus dem Übertopf 2 herausnehmbar ist.

Ausgehend von der vollständig ausgeschobenen Position der Griffe 24 gemäß Fig. 5 wird das Einsetzen des Einsetz-Behälters 3 in den Übertopf 2 und das Einschieben der Griffe 24 beschrieben. Der außerhalb des Übertopfes 2 angeordnete Einsetz-Behälter 3 wird anhand der Griffe 24 in den Übertopf 2 eingesetzt, wobei die Abstands-Halter 20 an dem Übertopf 2 anliegen. Die Zwischenräume 21, 27 ermöglichen eine Zirkulation der Luft zwischen dem Übertopf 2 und dem Einsetz-Behälter 3. Nach dem Einsetzen des Einsetz-Behälters 3 wird auf die Griffe 24 eine entgegen die Ausziehrichtung 23 gerichtete Kraft ausgeübt, so dass die Griffe 24 in Richtung der Griff-Führungen 25 verlagert werden. Mit zunehmender Verlagerung der Griffe 24 werden die Durchgriff-Öffnungen 48 verkleinert, bis die ersten Quer-Stangen 28 mit ihren unteren Seitenwänden 34 gegen die Behälter-Seitenwände 12, 14, die Führungs-Platten 44, die Längs-Streben 45 und die Führungs-Versteifungen 47 anschlagen. Die Griffe 24 sind nun vollständig eingefahren.

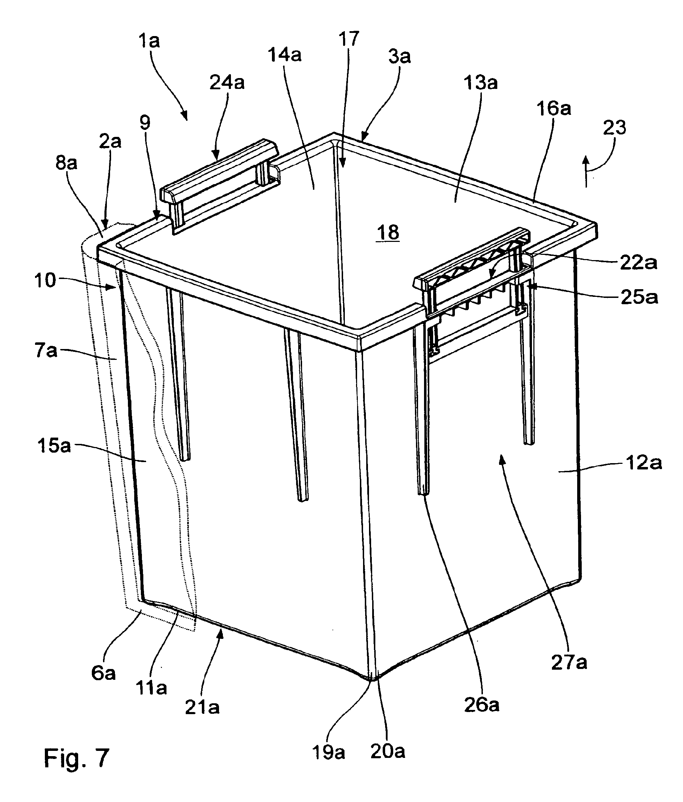

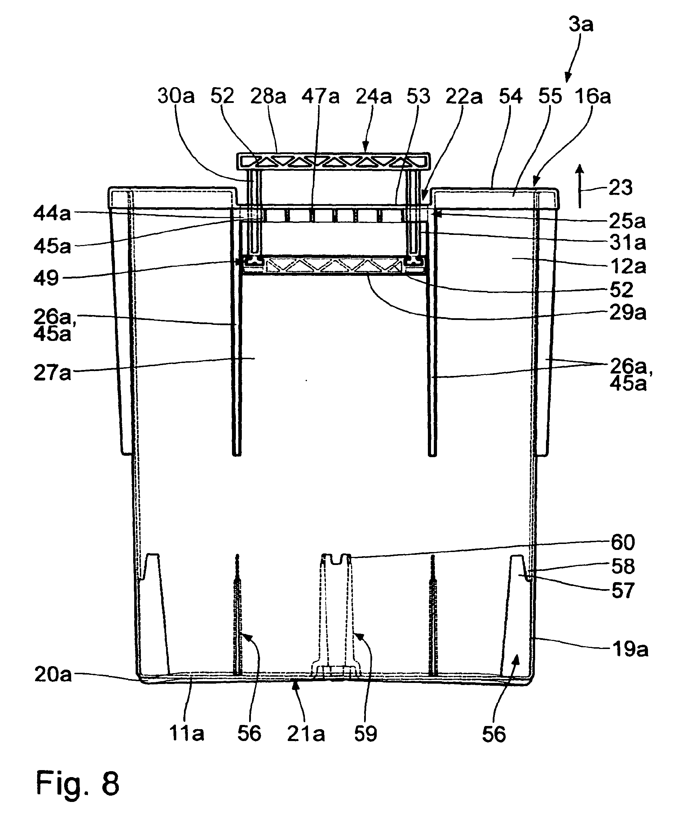

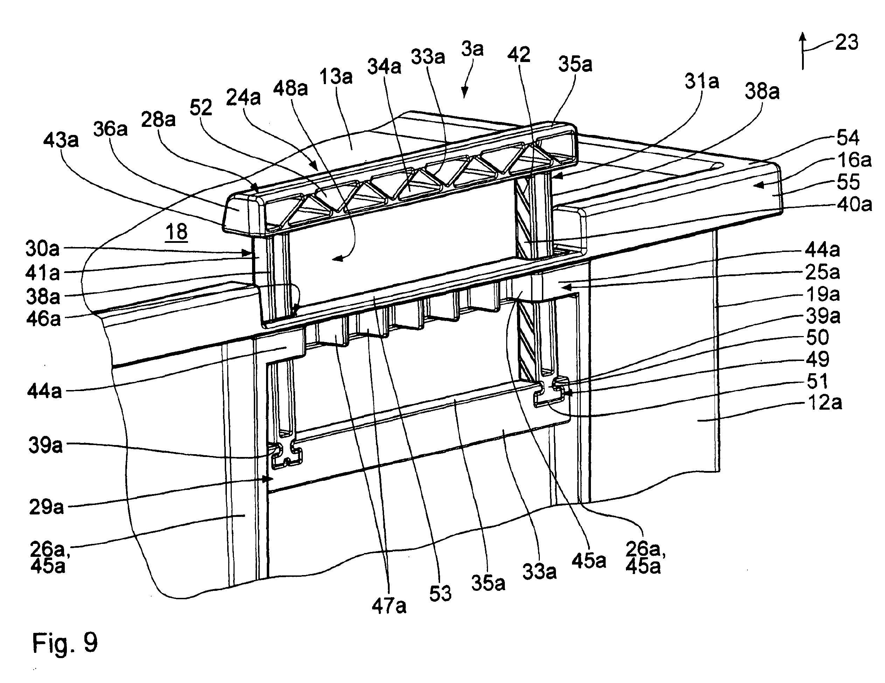

Nachfolgend wird unter Bezugnahme auf die Fig. 7 bis 9 ein zweites Ausführungsbeispiel der Erfindung beschrieben. Konstruktiv identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel liegt in der Ausgestaltung der Griffe 24a und der Griff-Führungen 25a. Nachfolgend wird der Griff 24a und die Griff-Führung 25a an der Behälter-Seitenwand 12a genauer beschrieben.

Der Griff 24a ist zur einfacheren Montage an den Einsetz-Behälter 3a zweiteilig ausgeführt. Die erste Quer-Stange 28a ist mit den Längs-Stangen 30a, 31a einteilig ausgebildet, wobei diese mittels Steck-Verbindungen 49 mit der zweiten Quer-Stange 29a lösbar verbunden sind. Die Steck-Verbindungen 49 weisen jeweils eine im Querschnitt T-förmige Feder 50 auf, die einteilig an die der Quer-Stange 29a zugewandte Stirnwand 39a der zugehörigen Längs-Stange 30a, 31a angeformt ist. Die Federn 50 erstrecken sich jeweils in eine entsprechend geformte Nut 51, die sich ausgehend von der oberen Seitenwand 35a bis ungefähr mittig in die zweite Quer-Stange 29a erstreckt. Die Steck-Verbindungen 49 sind derart ausgerichtet, dass die zweite Quer-Stange 29a mit den Nuten 51 in Richtung der ersten Behälter-Seitenwand 12a auf die mit den Längs-Stangen 30a, 31a verbundenen Federn 51 aufschiebbar ist. Zur Material- und Gewichtserspamis sind die Längs-Stangen 30a, 31 a und die Quer-Stangen 28a, 29a im Querschnitt U-förmig ausgebildet, wobei jeweils zwischen der unteren Seitenwand 34a und der oberen Seitenwand 35a der Quer-Stangen 28a, 29a Quer-Stangen-Streben 52 zick-zack-förmig angeordnet sind. Bei der zweiten Quer-Stange 29a erstrecken sich die Quer-Stangen-Streben 52 lediglich im Bereich zwischen den Steck-Verbindungen 49.

Die Griff-Führung 25a wird durch die Behälter-Seitenwand 12a, parallel und beabstandet zu der Behälter-Seitenwand 12a verlaufende Führungs-Platten 44a und durch zwischen der Behälter-Seitenwand 12a und den Führungs-Platten 44a quer zu diesen verlaufende Längs-Streben 45a gebildet. Zur Aufnahme einer Längs-Stange 30a, 31a bilden die Behälter-Seitenwand 12a, eine der Führungs-Platten 44a und zwei der Längs-Streben 45a jeweils eine Führungs-Öffnung 46a aus, wobei eine Längs-Strebe 45a gleichzeitig als Versteifungs-Strebe 26a ausgebildet ist. Zwischen den den profilierten Seitenwänden 40a zugewandten Längs-Streben 45a sind eine Vielzahl von ebenfalls als Längs-Streben ausgebildeten Führungs-Versteifungen 47a angeordnet, wobei die Führungs-Versteifungen 47a einteilig mit einer quer zu der Ausziehrichtung 23 verlaufenden Versteifungs-Leiste 53 ausgebildet sind. Die Versteifungs-Leiste 53 ist mit der Behälter-Seitenwand 12a, den Versteifungs-Streben 26a, den Führungs-Platten 44a, den Längs-Streben 45a und den Führungs-Versteifungen 47a verbunden, wobei die Versteifungs-Leiste 53 zusammen mit der ersten Quer-Stange 28a und den Längs-Stangen 30a, 31 a die Durchgriff-Öffnung 48a begrenzt.

Zur weiteren Versteifung des Einsetz-Behälters 3a im Bereich der Pflanz-Öffnung 17 weist der Behälter-Rand 16a einen im Wesentlichen quer zu den Behälter-Seitenwänden 12a, 13a, 14a, 15a verlaufenden ersten Rand-Abschnitt 54 und einen einteilig daran angeformten und im Wesentlichen parallel zu den jeweiligen Behälter-Seitenwänden 12a, 13a, 14a, 15a verlaufenden zweiten Rand-Abschnitt 55 auf. Die Rand-Abschnitte 54, 55 sind im Bereich der Ausnehmungen 22a mit den Versteifungs-Streben 26a einteilig verbunden.

Die Versteifungs-Streben 26a erstrecken sich ausgehend von dem Behälter-Rand 16a bis ungefähr in die Mitte der Behälter-Seitenwände 12a, 13a, 14a, 15a. Durch eine derartige Ausgestaltung der Versteifungs-Streben 26a wird ein einfacheres Stapeln von mehreren Einsetz-Behältern 3a ermöglicht.

Zur Versteifung des Einsetz-Behälters 3a im Bereich des Behälter-Bodens 11a erstrecken sich ausgehend vom Behälter-Boden 11a Boden-Versteifungs-Streben 56 in den Pflanz-Raums 18, die einteilig mit dem Behälter-Boden 11a und der jeweiligen Behälter-Seitenwand 12a, 13a, 14a, 15a ausgebildet sind. Die Boden-Versteifungs-Streben 56 fluchten mit den Versteifungs-Streben 26a und verjüngen sich in Ausziehrichtung 23. An ihren dem Behälter-Boden 11a abgewandten Enden weisen die Boden-Versteifungs-Streben 56 jeweils eine sich in Ausziehrichtung 23 erstreckende Rast-Nase 57 auf, wobei zwischen den Rast-Nasen 57 und der jeweiligen Behälter-Seitenwand 12a, 13a, 14a, 15a eine keilförmige Rast-Nut 58 ausgebildet ist. Die Boden-Versteifungs-Streben 56 verbessern die Stabilität des Behälter-Bodens 11 a, so dass ein Durchbiegen des Behälter-Bodens 11a verhindert wird. Weiterhin ermöglichen die Rast-Nasen 57 das Einhängen und Verrasten eines zusätzlichen Trenn-Bodens, so dass zwischen diesem und dem Behälter-Boden 11a ein Wasser-Vorratsraum ausgebildet wird.

Mittig in dem Behälter-Boden 11a ist ein Wasser-Überlauf 59 angeordnet, der sich ausgehend von dem Behälter-Boden 11a in Ausziehrichtung 23 in den Pflanz-Raum 18 erstreckt. Der Wasser-Überlauf 59 ist hohlzylinderförmig ausgebildet, wobei das freie Überlauf-Ende 60 mit den Rast-Nasen 57 der Boden-Versteifungs-Streben 56 fluchtet und ebenfalls mit dem Trenn-Boden verrastbar ist. Alternativ kann der Einsetz-Behälter 3a auch ohne einen Wasser-Überlauf 59 ausgebildet sein.

Die Abstands-Halter 20a des Einsetz-Behälters 3a sind als Vertiefungen des Behälter-Bodens 11a im Bereich der Längs-Kanten 19a ausgebildet. Im eingesetzten Zustand des Einsetz-Behälters 3a liegen die Abstands-Halter 20a an dem Übertopf-Boden 6a an, so dass sich zwischen dem Übertopf-Boden 6a und dem Behälter-Boden 11a der erste Zwischenraum 21 a ausbildet.

Bei der Montage des Griffs 24a werden zunächst die nicht mit der zweiten Quer-Stange 29a verbundenen Längs-Stangen 30a, 31a durch die Führungs-Öffnungen 46a geführt und entgegen die Ausziehrichtung 23 in die Griff-Führung 25a eingeschoben. Die zweite Quer-Stange 29a wird mit den Nuten 51 der Steck-Verbindungen 49 quer zu der Ausziehrichtung 23 auf die Federn 50 der Steck-Verbindungen 49 aufgeschoben, so dass die zweite Quer-Stange 29a mit den Längs-Stangen 30a, 31a verbunden ist. Das Aufschieben der zweiten Quer-Stange 29a wird entweder durch die Behälter-Seitenwand 12a oder durch zusätzliche Anschlag-Wände begrenzt, wobei die Anschlag-Wände entweder an den Längs-Stangen 30a, 31 a oder an der zweiten Quer-Stange 29a ausgebildet sein können. Hinsichtlich der weiteren Funktionsweise der Pflanztopf-Anordnung 1 a wird auf das erste Ausführungsbeispiel verwiesen.

## Patentansprüche

1. Pflanztopf-Anordnung mit
einem Übertopf (2; 2a) und
einem in dem Übertopf (2; 2a) angeordneten und aus diesem herausnehmbaren Einsetz-Behälter (3; 3a) zur Aufnahme einer Pflanze (4), der
einen Pflanz-Raum (18) begrenzt, und
an einem oberen Behälter-Rand (16; 16a) offen ausgebildet ist, **gekennzeichnet durch**
mindestens einem im Bereich des Behälter-Randes (16; 16a) angeordneten und entlang einer Ausziehrichtung (23) in einer Griff-Führung (25; 25a) geführt verlagerbaren Griff (24; 24a) zum Herausnehmen des Einsetz-Behälters (3; 3a) aus dem Übertopf (2; 2a),

2. Pflanztopf-Anordnung nach Anspruch 1, **dadurch gekennzeichnet, dass** der mindestens eine Griff (24; 24a) außerhalb des Pflanz-Raums (18) angeordnet ist.

3. Pflanztopf-Anordnung nach Anspruch 1 oder 2, **dadurch gekennzeichnet, dass** der mindestens eine Griff (24; 24a) einen sich in den Pflanz-Raum (18) erstreckenden Vorsprung (43; 43a) aufweist.

4. Pflanztopf-Anordnung nach einem der Ansprüche 1 bis 3, **dadurch gekennzeichnet, dass** der mindestens eine Griff (24; 24a) mindestens eine sich entlang der Ausziehrichtung (23) erstreckende und in der Griff-Führung (25; 25a) aufgenommene Längs-Stange (30, 31; 30a, 31 a) aufweist.

5. Pflanztopf-Anordnung nach Anspruch 4, **dadurch gekennzeichnet, dass** die mindestens eine Längs-Stange (30, 31; 30a, 31a) eine Profilierung (42) aufweist.

6. Pflanztopf-Anordnung nach einem der Ansprüche 1 bis 5, **dadurch gekennzeichnet, dass** der mindestens eine Griff (24; 24a) mindestens eine Quer-Stange (29; 29a) zur Begrenzung des Verlagerung in der Ausziehrichtung (23) aufweist.

7. Pflanztopf-Anordnung nach einem der Ansprüche 1 bis 6, **dadurch gekennzeichnet, dass** die Griff-Führung (25; 25a) einteilig an einer Behälter-Seitenwand (12, 14; 12a, 14a) des Einsetz-Behälters (3; 3a) ausgebildet ist.

8. Pflanztopf-Anordnung nach einem der Ansprüche 1 bis 7, **dadurch gekennzeichnet, dass** die Griff-Führung (25; 25a) mindestens zwei Längs-Streben (45; 45a) aufweist.

9. Pflanztopf-Anordnung nach Anspruch 8, **dadurch gekennzeichnet, dass** mindestens eine der Längs-Streben (45; 45a) als VersteifungsStrebe (26; 26a) zur Versteifung des Einsetz-Behälters (3; 3a) ausgebildet ist.

10. Pflanztopf-Anordnung nach einem der Ansprüche 1 bis 9, **dadurch gekennzeichnet, dass** der Einsetz-Behälter (3; 3a) und der mindestens eine Griff (24; 24a) aus Kunststoff bestehen.

11. Pflanztopf-Anordnung nach einem der Ansprüche 1 bis 10, **dadurch gekennzeichnet, dass** zum Anordnen des mindestens einen Griffes (24a) in der Griff-Führung (25a) mindestens eine an dem mindestens einen Griff (24a) angeordnete Steck-Verbindung (49) vorgesehen ist.

## Claims

1. Plant pot arrangement comprising
- an over pot (2; 2a) and
- an insert container (3; 3a) positioned in the over pot (2; 2a) and removable therefrom, for receiving a plant (4), the insert container (3; 3a)
-- defining a space (18) for a plant, and
-- being open at an upper container edge (16; 16a),
**characterised by**
- at least one handle (24; 24a) being movable in a guided manner in a handle guide (25; 25a) in a pull-out direction (23) and being positioned in the region of the container edge (16; 16a), for removing the insert container (3; 3a) from the over pot (2; 2a).

2. Plant pot arrangement according to claim 1, **characterised in that** the at least one handle (24; 24a) is positioned outside the space (18) for a plant.

3. Plant pot arrangement according to claim 1 or 2, **characterised in that** the at least one handle (24; 24a) has a projection (43; 43a) extending into the plant space (18).

4. Plant pot arrangement according to any one of claims 1 to 3, **characterised in that** the at least one handle (24; 24a) has at least one longitudinal bar (30, 31, 30a, 31a) extending in the pull-out direction (23) and received in the handle guide (25; 25a).

5. Plant pot arrangement according to claim 4, **characterised in that** the at least one longitudinal rod (30, 31; 30a, 31a) has a profiling (42).

6. Plant pot arrangement according to any one of claims 1 to 5, **characterised in that** the at least one handle (24; 24a) has at least one crossbar (29; 29a) for restricting the movement in the pull-out direction (23).

7. Plant pot arrangement according to any one of claims 1 to 6, **characterised in that** the handle guide (25; 25a) is formed in one piece on a side wall (12, 14; 12a, 14a) of the insert container (3; 3a).

8. Plant pot arrangement according to any one of claims 1 to 7, **characterised in that** the handle guide (25; 25a) has at least two longitudinal struts (45; 45a).

9. Plant pot arrangement according to claim 8, **characterised in that** at least one of the longitudinal struts (45; 45a) is configured as a reinforcement strut (26; 26a) for reinforcing the inset container (3; 3a).

10. Plant pot arrangement according to any one of claims 1 to 9, **characterised in that** the insert container (3; 3a) and the at least one handle (24; 24a) are made of plastics material.

11. Plant pot arrangement according to any one of claims 1 to 10, **characterised in that** at least one push-fit fitting (49) positioned on the at least one handle (24a) is provided for positioning the at least one handle (24a) in the handle guide (25a).

## Revendications

1. Arrangement de pot de fleurs avec
un cache pot (2 ; 2a) et
avec un bac d'insertion (3 ; 3a) disposé dans le cache pot (2 ; 2a) dont il peut être extrait, servant à recevoir une plante (4), qui
délimite un compartiment à fleurs (18) et
qui est ouvert sur un bord supérieur de bac (16 ; 16a)
**caractérisé par**
au moins une poignée (24 ; 24a) stockable, disposée au niveau du bord du bac (16 ; 16a) et le long d'un sens d'extraction (23) dirigée dans une coulisse de poignée (25 ; 25a), servant à retirer le bac d'insertion (3 ; 3a) du cache pot (2 ; 2a).

2. Arrangement de pot de fleurs selon la revendication 1, **caractérisé en ce que** la poignée (24 ; 24a), au moins au nombre de une, est disposée hors du compartiment à fleurs (18).

3. Arrangement de pot de fleurs selon la revendication 1 ou 2, **caractérisé en ce que** la poignée (24 ; 24a), au moins au nombre de une, présente une saillie (43 ; 43a) orientée vers le compartiment à fleurs (18).

4. Arrangement de pot de fleurs selon l'une des revendications 1 à 3, **caractérisé en ce que** la poignée (24 ; 24a), au moins au nombre de une, présente au moins une barre longitudinale (30, 31 ; 30a, 31a) s'étirant le long du sens d'extraction (23) et reçue dans la coulisse de poignée (25 ; 25a).Arrangement de pot de fleurs selon la revendication 4, **caractérisé en ce que** la barre longitudinale (30, 31 ; 30a, 31a), au moins au nombre de une, présente un profilé (42).

5. Arrangement de pot de fleurs selon l'une des revendications 1 à 5, **caractérisé en ce que** la poignée (24 ; 24a) au moins au nombre de une, présente au moins une barre transversale (29 ; 29a), laquelle sert à délimiter le stockage dans le sens d'extraction (23)

6. Arrangement de pot de fleurs selon l'une des revendications 1 à 6, **caractérisé en ce que** la coulisse de poignée (25 ; 25a) est conçue de façon monobloc sur une paroi latérale de bac (12, 14 ; 12a, 14a) du bac d'insertion (3 ; 3a).

7. Arrangement de pot de fleurs selon l'une des revendications 1 à 7, **caractérisé en ce que** la coulisse de poignée (25 ; 25a) présente au moins deux traverses longitudinales (45 ; 45a).

8. Arrangement de pot de fleurs selon la revendication 8, **caractérisé en ce que** au moins une des traverses longitudinales (45 ; 45a) est conçue comme une traverse de rigidification (26 ; 26a) pour rigidifier le bac d'insertion (3 ; 3a).

9. Arrangement de pot de fleurs selon l'une des revendications 1 à 9, **caractérisé en ce que** le bac d'insertion (3 ; 3a) et la poignée (24 ; 24a), au moins au nombre de une, sont en matière plastique.

10. Arrangement de pot de fleurs selon l'une des revendications 1 à 10, **caractérisé en ce que** pour le placement de la poignée (24a), au moins au nombre de une, dans la coulisse de poignée (25a), au moins une fiche de connexion (49) disposée sur la poignée (24a), au moins au nombre de une, est prévue.
